# EUROPEAN PATENT APPLICATION

(11) **EP 4 810 864 A1**
(43) Date of publication of application: **23.09.2026**
(21) Application number: 24890133.2
(22) Date of filing: 04.07.2024
(51) Int. Cl.: F24F 11/36, F24F 11/65, F24F 11/52

(54) **CONTROL METHOD AND CONTROL APPARATUS FOR AIR CONDITIONING SYSTEM, AND AIR CONDITIONING SYSTEM**

(30) Priority: 16.11.2023 CN 202311533284
(71) Applicant: Qingdao Haier Intelligent Building Technology Co., Ltd., Qingdao, Shandong 266101 (CN); Qingdao Haier Air-Conditioning Electronic Co., Ltd, Qingdao, Shandong 266500 (CN); Qingdao Haier Air Conditioner General Corp., Ltd., Qingdao, Shandong 266101 (CN); Qingdao Haier Smart Technology R&D Co., Ltd., Qingdao, Shandong 266101 (CN); HAIER SMART HOME CO., LTD., Qingdao, Shandong 266101 (CN)
(72) Inventor: WANG, Feng, Qingdao, Shandong 266101 (CN); GUO, Defang, Qingdao, Shandong 266101 (CN); ZHOU, Shunlai, Qingdao, Shandong 266101 (CN); PEI, Mingshu, Qingdao, Shandong 266101 (CN); WANG, Dashan, Qingdao, Shandong 266101 (CN); SHI, Bin, Qingdao, Shandong 266101 (CN); GU, Chao, Qingdao, Shandong 266101 (CN)
(74) Representative: Geskes, Christoph
(86) International application number: PCT/CN2024/103532
(87) International publication number: WO 2025/102764

(57) **Abstract**

The present application relates to the technical field of air conditioning systems. Provided are a control method and control apparatus for an air conditioning system, and an air conditioning system. The control method for an air conditioning system comprises: acquiring an ambient temperature, and a refrigerant pressure in a refrigerant pipe; on the basis of the ambient temperature and a preset saturated pressure relationship, determining a saturated refrigerant pressure in the refrigerant pipe; on the basis of the refrigerant pressure and the saturated refrigerant pressure, determining a pipe state of the refrigerant pipe, wherein the pipe state comprises a sealed state and a leakage state; when the pipe state is the sealed state, controlling an air conditioning system to operate in a preset mode; and when the pipe state is the leakage state, determining an emergency mode of the air conditioning system on the basis of the refrigerant pressure, and controlling the air conditioning system to execute the emergency mode, wherein the emergency mode at least comprises a power-off mode and a refrigerant discharge mode. When a refrigerant pipe is in a leakage state, an air conditioning system is controlled to execute an emergency mode, such that an electric control component of the air conditioning system can be prevented from igniting leaked refrigerant, thereby improving the safety of the air conditioning system.

## Description

### CROSS-REFERENCES TO RELATED APPLICATIONS

The present application claims priority to Chinese Patent Application No. 202311533284.6 filed on November 16, 2023, entitled "Method and Apparatus for Controlling an Air Conditioning System, and Air Conditioning System", which is hereby incorporated by reference in its entirety.

### FIELD

The present application relates to the field of air conditioning systems, and in particular, to a method and apparatus for controlling an air conditioning system, and an air conditioning system.

### BACKGROUND

Air conditioning systems are mostly installed in closed indoor environments to adjust the ambient temperature, thereby improving the comfort of people. The air conditioning systems include electronic control assemblies and refrigerant pipelines, and eco-friendly refrigerants circulate in the refrigerant pipelines. However, most eco-friendly refrigerants are flammable, and there may be a risk of arcing when the electronic control assemblies are started. After flammable refrigerants leak, if they encounter arcing of the electronic control assemblies, they are highly prone to combustion or explosion, which will cause serious harm.

### BRIEF SUMMARY

The present application aims to solve at least one of the technical problems existing in the related art. Therefore, the present application proposes a method for controlling an air conditioning system. When the refrigerant pipeline of the air conditioning system is in a leakage state, an emergency mode of the air conditioning system is determined according to a refrigerant pressure in the refrigerant pipeline, and the air conditioning system is controlled to execute the emergency mode. This may prevent the electronic control assembly of the air conditioning system from igniting the leaked refrigerant, improve the safety of the air conditioning system, and avoid harmful consequences.

The present application further provides an apparatus for controlling an air conditioning system.

The present application further provides an air conditioning system.

The Embodiments of the first aspect of the present application provide a method for controlling an air conditioning system, and the method includes:
acquiring an ambient temperature and a refrigerant pressure in a refrigerant pipeline, determining a saturated refrigerant pressure in the refrigerant pipeline according to the ambient temperature and a predetermined saturated pressure relationship, and determining a pipeline state of the refrigerant pipeline according to the refrigerant pressure and the saturated refrigerant pressure, where the pipeline state includes a sealed state and a leakage state;
controlling the air conditioning system to operate according to a preset mode when the pipeline state is the sealed state; and
determining an emergency mode of the air conditioning system according to the refrigerant pressure when the pipeline state is the leakage state, and controlling the air conditioning system to execute the emergency mode, where the emergency mode at least includes a power-off mode and a refrigerant discharge mode.

In some embodiments of the present application, determining the pipeline state of the refrigerant pipeline according to the refrigerant pressure and the saturated refrigerant pressure, includes:
determining that the pipeline state is the sealed state when the refrigerant pressure is greater than or equal to the saturated refrigerant pressure; and
determining that the pipeline state is the leakage state when the refrigerant pressure is less than the saturated refrigerant pressure.

In some embodiments of the present application, determining the emergency mode of the air conditioning system according to the refrigerant pressure, includes:
determining that the emergency mode is the refrigerant discharge mode when the refrigerant pressure is less than the saturated refrigerant pressure, and greater than a minimum refrigerant operating pressure; and
determining that the emergency mode is the power-off mode when the refrigerant pressure is less than or equal to the minimum refrigerant operating pressure.

In some embodiments of the present application, when the emergency mode is the refrigerant discharge mode, controlling the air conditioning system to execute the emergency mode includes:
controlling a fan to operate until a preset condition is met,
where the preset condition includes: an operating duration of the fan is greater than or equal to a preset duration, or a refrigerant concentration in a lower cavity is less than or equal to a preset safe concentration.

In some embodiments of the present application, when the emergency mode is the refrigerant discharge mode, controlling the air conditioning system to execute the emergency mode further includes:
controlling a display panel to display prompt information, where the prompt information at least includes information prompting maintenance.

In some embodiments of the present application, the method for controlling the air conditioning system further includes:
acquiring a real-time temperature in a sealed box, and determining a temperature state of the air conditioning system according to the real-time temperature and a predetermined temperature-load relationship, where the temperature state includes a normal state and an overtemperature state;
reducing an operating load of the air conditioning system to a target load when the temperature state is the overtemperature state, where a ratio between the target load and the operating load is less than 1; and
controlling the air conditioning system to operate according to the preset mode when the temperature state is the normal state.

In some embodiments of the present application, when the temperature state is the overtemperature state, the method for controlling the air conditioning system further includes:
controlling a heat dissipation air duct to be opened, determining a heat dissipation level of the fan according to the real-time temperature and a predetermined heat dissipation level relationship, and controlling the fan to operate at the heat dissipation level.

In some embodiments of the present application, after reducing the operating load of the air conditioning system to the target load, the method further includes:
controlling the air conditioning system to shut down when the operating load is less than or equal to a preset load.

Embodiments of the second aspect of the present application provide an apparatus for controlling an air conditioning system, and the apparatus includes:
an acquisition module, configured to acquire an ambient temperature and a refrigerant pressure in a refrigerant pipeline, determine a saturated refrigerant pressure in the refrigerant pipeline according to the ambient temperature and a predetermined saturated pressure relationship, and determine a pipeline state of the refrigerant pipeline according to the refrigerant pressure and the saturated refrigerant pressure, where the pipeline state includes a sealed state and a leakage state; and
a control module, configured to control the air conditioning system to operate according to a preset mode when the pipeline state is the sealed state; and determine an emergency mode of the air conditioning system according to the refrigerant pressure when the pipeline state is the leakage state, and control the air conditioning system to execute the emergency mode, where the emergency mode at least includes a power-off mode and a refrigerant discharge mode.

Embodiments of the third aspect of the present application provide an air conditioning system, including: a memory, a processor, and a computer program stored on the memory and executable on the processor, where the processor executes the computer program to implement the method for controlling an air conditioning system according to the embodiments of the first aspect of the present application.

The above one or more solutions in the present application have at least one of the following technical effects:
a method for controlling an air conditioning system according to embodiments of the present application includes: acquiring an ambient temperature and a refrigerant pressure in a refrigerant pipeline, determining a saturated refrigerant pressure in the refrigerant pipeline according to the ambient temperature and a predetermined saturated pressure relationship, and determining a pipeline state of the refrigerant pipeline according to the refrigerant pressure and the saturated refrigerant pressure, where the pipeline state includes a sealed state and a leakage state; controlling the air conditioning system to operate according to a preset mode when the pipeline state is the sealed state; and determining an emergency mode of the air conditioning system according to the refrigerant pressure when the pipeline state is the leakage state, and controlling the air conditioning system to execute the emergency mode, where the emergency mode at least includes a power-off mode and a refrigerant discharge mode. During the operation of the air conditioning system, when the refrigerant pipeline of the air conditioning system is in the leakage state, determining the emergency mode of the air conditioning system according to the refrigerant pressure in the refrigerant pipeline and controlling the air conditioning system to execute the emergency mode, which may prevent the electronic control assembly of the air conditioning system from igniting the leaked refrigerant, thereby improving the safety of the air conditioning system.

### BRIEF DESCRIPTION OF THE DRAWINGS

To illustrate the solutions in the embodiments of the present application more clearly, the drawings required to be used in the description of the embodiments will be briefly described below. The drawings in the following description are some embodiments of the present application. For those skilled in the art, other drawings may be obtained based on these drawings without any creative effort.
FIG. 1 is a first flowchart of a method for controlling an air conditioning system according to an embodiment of the present application;
FIG. 2 is a second flowchart of a method for controlling an air conditioning system according to an embodiment of the present application;
FIG. 3 is a schematic structural diagram of an air conditioning system according to an embodiment of the present application;
FIG. 4 is a schematic structural diagram of an apparatus for controlling an air conditioning system according to an embodiment of the present application;
FIG. 5 is a schematic structural diagram of an electronic device of an air conditioning system according to an embodiment of the present application.

### Reference Numerals:

300, Sealed box; 301, Upper cavity; 302, Lower cavity; 303, First heat dissipation through-hole; 304, Second heat dissipation through-hole; 305, Air inlet/outlet; 306, Refrigerant through-hole; 401, Acquisition module; 402, Control module.

### DETAILED DESCRIPTION

To make the objectives, solutions, and advantages of the present application clearer, the solutions in the present application will be clearly described below in conjunction with the accompanying drawings in the present application. Obviously, the described embodiments are a part of the embodiments of the present application, rather than all of the embodiments. Based on the embodiments in the present application, all other embodiments obtained by those skilled in the art without creative efforts shall fall within the protection scope of the present application.

In the description of the embodiments of the present application, it should be noted that the orientation or positional relationships indicated by the terms "center", "longitudinal", "transverse", "upper", "lower", "front", "rear", "left", "right", "vertical", "horizontal", "top", "bottom", "inner", "outer", etc. are based on the orientation or positional relationships shown in the drawings, and are only for the convenience of describing the embodiments of the present application and simplifying the description, rather than indicating or implying that the apparatus or element referred to must have a specific orientation or be constructed and operated in a specific orientation, and therefore may not be understood as a limitation on the embodiments of the present application. In addition, the terms "first", "second", and "third" are used for descriptive purposes only and may not be understood as indicating or implying relative importance.

In the description of the embodiments of the present application, it should be noted that, unless otherwise explicitly specified and defined, the terms "connected" and "coupled" should be understood in a broad sense, for example, it may be a fixed connection, a detachable connection, or an integral connection; it may be a mechanical connection or an electrical connection; or it may be a direct connection or an indirect connection through an intermediate medium. For those skilled in the art, the specific meanings of the above terms in the embodiments of the present application may be understood according to specific circumstances.

In the embodiments of the present application, unless otherwise explicitly specified and defined, a first feature being "on" or "under" a second feature may mean that the first and second features are in direct contact, or the first and second features are in indirect contact through an intermediate medium. Moreover, the first feature being "above", "over", and "on top of" the second feature may mean that the first feature is directly above or obliquely above the second feature, or simply means that the horizontal height of the first feature is higher than that of the second feature. The first feature being "below", "underneath", and "under" the second feature may mean that the first feature is directly below or obliquely below the second feature, or simply means that the horizontal height of the first feature is less than that of the second feature.

In the description of this specification, the descriptions with reference to the terms "one embodiment", "some embodiments", "example", "specific example", or "some examples" mean that specific features, structures, materials, or characteristics described in conjunction with the embodiment or example are included in at least one embodiment or example of the embodiments of the present application. In this specification, the schematic representations of the above terms do not necessarily refer to the same embodiment or example. Moreover, the described specific features, structures, materials, or characteristics may be combined in any one or more embodiments or examples in an appropriate manner. In addition, those skilled in the art may integrate and combine different embodiments or examples and the features of different embodiments or examples described in this specification, provided that they do not contradict each other.

In the related art, eco-friendly refrigerants circulate in refrigerant pipelines. However, most eco-friendly refrigerants are flammable, and there may be a risk of arcing when the electronic control assemblies are started. After flammable refrigerants leak, if they encounter arcing of the electronic control assemblies, they are highly prone to combustion or explosion, which will cause serious harm.

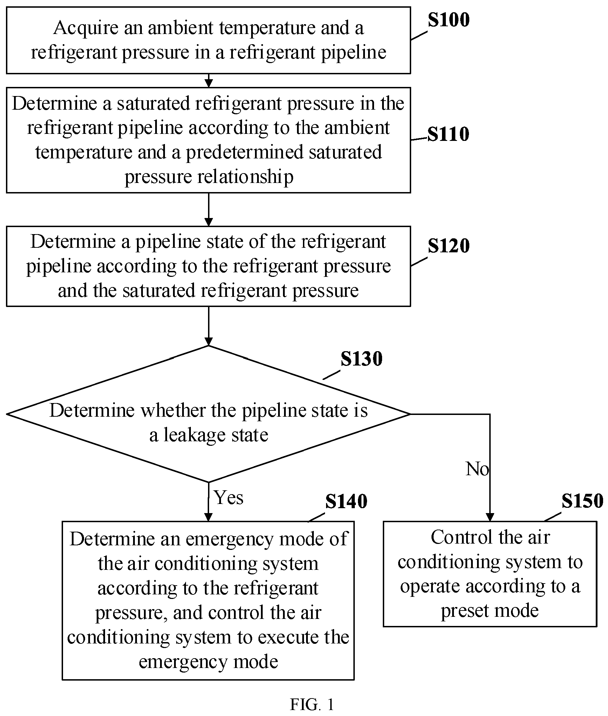

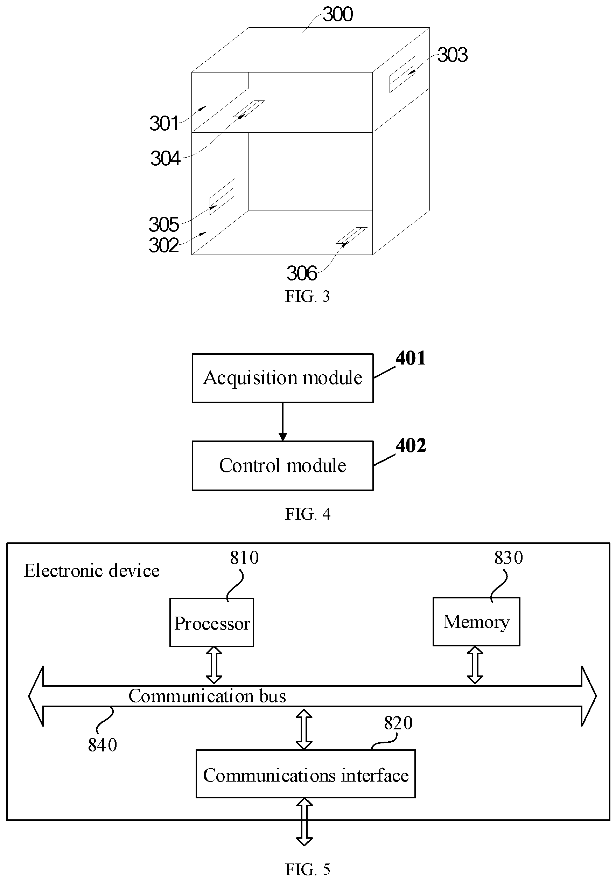

The air conditioning system involved in the present application includes a sealed box 300, and the sealed box 300 is divided into an upper cavity 301 and a lower cavity 302 by a partition board. The upper cavity 301 and the lower cavity 302 are isolated from each other. The upper cavity 301 is configured to place an electronic control assembly, and the lower cavity 302 is configured to place a fan and a refrigerant pipeline. Referring to FIG. 3, an embodiment of the present application provides a schematic diagram of the sealed box 300. A first heat dissipation through-hole 303 is provided at a position of the sealed box 300 corresponding to the upper cavity 301. A second heat dissipation through-hole 304 is provided on the partition board. The electronic control assembly is provided in the upper cavity 301, where the first heat dissipation through-hole 303 and the second heat dissipation through-hole 304 are located on different sides of the electronic control assembly. The second heat dissipation through-hole 304 communicates the upper cavity 301 and the lower cavity 302. A fan is provided on one side within the lower cavity 302, such as the left side in FIG. 1. At this time, the refrigerant pipeline is provided on the right side of the lower cavity 302. A refrigerant through-hole 306 is provided at a bottom position of the sealed box 300 corresponding to the refrigerant pipeline. Since the density of the refrigerant is greater than that of air, the refrigerant may flow out naturally along the refrigerant through-hole 306 under natural conditions. An air inlet/outlet 305 is provided on a side wall of the sealed box 300 corresponding to the lower cavity 302. The air inlet/outlet 305 may allow natural wind to enter or exit, and may further provide air for the fan to balance the air pressure. An exhaust port (not shown in the figure) is provided at a position of the sealed box 300 corresponding to an exhaust side of the fan, and the exhaust port is located directly in front of the fan.

In the air conditioning system according to embodiments of the present application, the sealed box 300 adopts a heat-dissipating metal box body. Heat generated when the electronic control assembly works may be naturally released along the first heat dissipation through-hole 303 and the box body, or it may be actively dissipated along a heat dissipation air duct formed by the first heat dissipation through-hole 303, the upper cavity 301, the second heat dissipation through-hole 304, the lower cavity 302, and the exhaust port directly in front of the fan. The refrigerant leaked from the refrigerant pipeline may naturally flow out along the refrigerant through-hole 306 under the action of gravity, or it may be actively discharged along a refrigerant air duct formed by the refrigerant through-hole 306 and the exhaust port directly in front of the fan.

A ventilation valve may be provided at the second heat dissipation through-hole 304. The ventilation valve may be closed in a non-heat dissipation mode, thereby isolating the upper cavity 301 and the lower cavity 302.

Referring to FIG. 1, a method for controlling an air conditioning system according to the embodiments of the first aspect of the present application is at least applied to the above air conditioning system, which includes:
acquiring an ambient temperature and a refrigerant pressure in a refrigerant pipeline, determining a saturated refrigerant pressure in the refrigerant pipeline according to the ambient temperature and a predetermined saturated pressure relationship, and determining a pipeline state of the refrigerant pipeline according to the refrigerant pressure and the saturated refrigerant pressure, where the pipeline state includes a sealed state and a leakage state.

It may be understood that a temperature sensor is provided within the air conditioning system, and the current ambient temperature may be detected by this temperature sensor. In some cases, the air conditioning system includes a communication component, and the communication component is communicatively connected to an external temperature sensor or connected to the Internet to acquire the current ambient temperature. At a specific ambient temperature, the saturated refrigerant pressure in the refrigerant pipeline is determined. Therefore, the saturated refrigerant pressure in the refrigerant pipeline may be determined according to the current ambient temperature and the saturated pressure relationship/chart. Based on the real-time refrigerant pressure in the refrigerant pipeline and the calculated saturated refrigerant pressure, the pipeline state of the refrigerant pipeline may be determined. For example, when there is a refrigerant leakage, the real-time refrigerant pressure will be lower than the saturated refrigerant pressure.

The air conditioning system is controlled to operate according to a preset mode when the pipeline state is the sealed state.

It may be understood that when the pipeline state is the sealed state, there is no leaked refrigerant in the lower cavity, and there is no danger when the electronic control assembly of the air conditioning system is working, so it may just operate according to the preset mode.

An emergency mode of the air conditioning system is determined according to the refrigerant pressure when the pipeline state is the leakage state, and the air conditioning system is controlled to execute the emergency mode, where the emergency mode at least includes a power-off mode and a refrigerant discharge mode.

It may be understood that when the refrigerant pipeline is in the leakage state, the refrigerant in the lower cavity may flow out along the refrigerant through-hole. In order to prevent the leaked refrigerant from entering the upper cavity and reacting with the electronic control assembly, the emergency mode of the air conditioning system may be determined according to the refrigerant pressure. The emergency mode at least includes a power-off mode and a refrigerant discharge mode. Both emergency modes may reduce the risk of refrigerant combustion and are applicable to different dangerous situations.

Referring to FIG. 1, the method for controlling an air conditioning system according to an embodiment of the present application includes the following steps:
S100, acquiring an ambient temperature and a refrigerant pressure in a refrigerant pipeline;
S110, determining a saturated refrigerant pressure in the refrigerant pipeline according to the ambient temperature and a predetermined saturated pressure relationship;
S120, determining a pipeline state of the refrigerant pipeline according to the refrigerant pressure and the saturated refrigerant pressure;
S130, determining whether the pipeline state is a leakage state;
If yes, executing step S140; if no, executing step S150;
S140, determining an emergency mode of the air conditioning system according to the refrigerant pressure, and controlling the air conditioning system to execute the emergency mode; and
S150, controlling the air conditioning system to operate according to a preset mode.

Through the above steps S100 to S150, during the operation of the air conditioning system, when the refrigerant pipeline of the air conditioning system is in a leakage state, the emergency mode of the air conditioning system is determined according to the refrigerant pressure in the refrigerant pipeline, and the air conditioning system is controlled to execute the emergency mode. This may prevent the electronic control assembly of the air conditioning system from igniting the leaked refrigerant, improve the safety of the air conditioning system, and avoid harmful consequences.

It should be noted that, in other air conditioning systems, if the refrigerant pipeline and the electronic control assembly are arranged separately and there is a risk of igniting the refrigerant, the method for controlling the air conditioning system according to embodiments of the present application may also be performed.

In some embodiments, determining the pipeline state of the refrigerant pipeline according to the refrigerant pressure and the saturated refrigerant pressure includes the following steps:
S121, determining that the pipeline state is a sealed state when the refrigerant pressure is greater than or equal to the saturated refrigerant pressure; and
S122, determining that the pipeline state is a leakage state when the refrigerant pressure is less than the saturated refrigerant pressure.

In step S121 to step S122, the pipeline state of the refrigerant pipeline may be determined by the real-time refrigerant pressure in the refrigerant pipeline and the calculated saturated refrigerant pressure. For example, when the refrigerant leaks, the real-time refrigerant pressure will be lower than the saturated refrigerant pressure. When the refrigerant pressure is greater than or equal to the saturated refrigerant pressure, it proves that there is no refrigerant leakage in the refrigerant pipeline; when the refrigerant pressure is less than the saturated refrigerant pressure, it proves that part of the refrigerant in the refrigerant pipeline has flowed out, thereby resulting in the refrigerant pressure failing to reach the saturated refrigerant pressure.

In some embodiments, determining the emergency mode of the air conditioning system according to the refrigerant pressure includes the following steps:
S141, determining that the emergency mode is a refrigerant discharge mode when the refrigerant pressure is less than the saturated refrigerant pressure and greater than a minimum refrigerant operating pressure.

In step S141, if the refrigerant pressure in the refrigerant pipeline is between the saturated refrigerant pressure and the minimum refrigerant operating pressure, there is a small amount of refrigerant leakage in the air conditioning system at this time, but it may still maintain the most basic operation and may meet the user's cooling or heating needs. Therefore, the air conditioning system may be controlled to run the refrigerant discharge mode to discharge the small amount of refrigerant in the lower cavity. At the same time, the air conditioning system may be controlled to run a preset working mode to meet the normal functional use of the user. When running the refrigerant discharge mode, the small amount of leaked refrigerant in the lower cavity is quickly discharged to the outside of the sealed box and will not cause danger with the electronic control assembly.

S142, determining that the emergency mode is a power-off mode when the refrigerant pressure is less than or equal to the minimum refrigerant operating pressure.

In step S142, if the refrigerant pressure is less than or equal to the minimum refrigerant operating pressure, it proves that the refrigerant leakage of the refrigerant pipeline is relatively serious. At this time, it is necessary to take an emergency measure of powering off and shutting down to avoid the leaked refrigerant from being ignited by the electronic control assembly, thereby improving the safety of the air conditioning system.

In some embodiments, when the emergency mode is the refrigerant discharge mode, controlling the air conditioning system to execute the emergency mode includes:
S1411, controlling a fan to operate until a preset condition is met, where the preset condition includes: an operating duration of the fan is greater than or equal to a preset duration, or a refrigerant concentration in a lower cavity is less than or equal to a preset safe concentration.

It may be understood that when the emergency mode of refrigerant discharge is adopted, the refrigerant and air in the lower cavity are discharged along the exhaust port in front of the fan by the fan. The refrigerant through-hole provides a function of balancing the air pressure, and may bring all the refrigerant at the bottom of the lower cavity to the fan and discharge it along the exhaust port. In order to achieve a complete discharge of the refrigerant, the fan needs to run for at least a preset duration or run until the refrigerant concentration is less than or equal to a preset safe concentration.

In some embodiments, when the emergency mode is the refrigerant discharge mode, controlling the air conditioning system to execute the emergency mode further includes:
controlling a display panel to display prompt information, where the prompt information at least includes information prompting maintenance.

It may be understood that when the air conditioning system executes the refrigerant discharge mode, the air conditioning system does not shut down but may maintain a normal operating state. At this time, prompt information may be displayed through the display panel to remind the user that the refrigerant pressure in the refrigerant pipeline is low, and the refrigerant leaks, and maintenance is required, etc., thereby reminding the user to eliminate potential dangers as soon as possible.

In some embodiments, the method for controlling an air conditioning system further includes:
acquiring a real-time temperature in a sealed box, and determining a temperature state of the air conditioning system according to the real-time temperature and a predetermined temperature-load relationship, where the temperature state includes a normal state and an overtemperature state;
reducing an operating load of the air conditioning system to a target load when the temperature state is the overtemperature state, where a ratio between the target load and the operating load is less than 1; and
controlling the air conditioning system to operate according to the preset mode when the temperature state is the normal state.

It may be understood that a temperature sensor is provided in the sealed box, and the temperature sensor is used to monitor the temperature of the electronic control assembly in real time to avoid circuit failures when the temperature is high. The sealed box according to embodiments of the present application prevents the danger of refrigerant leakage, so more attention needs to be paid to the heat dissipation capacity of the electronic control assembly. The sealed box is made of heat-dissipating materials, which may improve the heat dissipation capacity of the air conditioning system. To ensure the stable operation of the air conditioning system, the temperature inside the sealed box needs to be controlled at a reliable temperature Tam. If the real-time temperature is greater than the reliable temperature Tam, the temperature state is an overtemperature state; and if the real-time temperature is less than or equal to the reliable temperature Tam, the temperature state is a normal state. When the temperature state is the overtemperature state, the operating load of the air conditioning system is reduced to the target load, thereby reducing the heat dissipation of the electronic control assembly, compressor, or fan, which helps to lower the temperature in the sealed box, thus ensuring the stable operation of the air conditioning system.

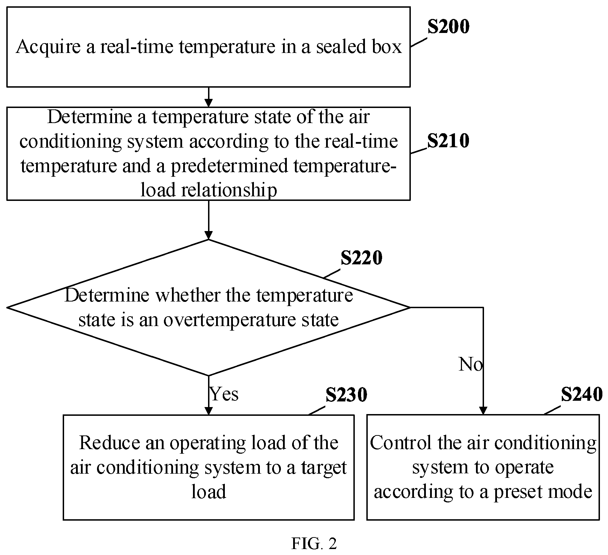

Referring to FIG. 2, the method for controlling an air conditioning system according to an embodiment of the present application includes the following steps:
S200, acquiring a real-time temperature in a sealed box;
S210, determining a temperature state of the air conditioning system according to the real-time temperature and a predetermined temperature-load relationship;
S220, determining whether the temperature state is an overtemperature state;
If yes, executing step S230; if no, executing step S240;
S230, reducing an operating load of the air conditioning system to a target load; and
S240, controlling the air conditioning system to operate according to a preset mode.

Through the above steps S200 to S240, it helps to lower the temperature in the sealed box, thereby ensuring the stable operation of the air conditioning system.

In some embodiments, when the temperature state is the overtemperature state, the method for controlling the air conditioning system further includes:
S231, controlling a heat dissipation air duct to be opened, determining a heat dissipation level of the fan according to the real-time temperature and a predetermined heat dissipation level relationship, and controlling the fan to operate at the heat dissipation level.

In step S231, when the sealed box is in an overtemperature state, the heat dissipation air duct may be actively controlled to be opened, for example, a valve at the second heat dissipation through-hole may be opened to make the first heat dissipation through-hole, the second heat dissipation through-hole, and the exhaust port form a heat dissipation air duct. Then, the fan is used to actively cool down the sealed box, improving the cooling efficiency. Further, the heat dissipation level of the fan may be determined according to the real-time temperature and a predetermined heat dissipation level relationship. When the real-time temperature is high, a higher wind speed may be used for heat dissipation, improving the heat dissipation efficiency. There is a positive correlation between the real-time temperature and the wind speed.

In some embodiments, after reducing the operating load of the air conditioning system to the target load, the method further includes:
controlling the air conditioning system to shut down when the operating load is less than or equal to a preset load.

It may be understood that the air conditioning system adopts a periodic adjustment strategy when performing temperature control. For example, the real-time temperature is acquired every 1 minute. If the real-time temperature in the sealed box is high, the operating load is reduced every 1 minute until the heat dissipation capacity of the sealed box is greater than its heating capacity. In some cases, as the operating load of the air conditioning system gradually decreases, for example, the operating load is reduced to less than or equal to a preset load, the real-time temperature in the sealed box does not drop. Therefore, it is necessary to shut down the air conditioning system, promptly check the cause of the malfunction, and prevent damage to electronic components.

Referring to FIG. 4, an apparatus for controlling an air conditioning system according to embodiments of the second aspect of the present application includes the following modules:
an acquisition module 401, configured to acquire an ambient temperature and a refrigerant pressure in a refrigerant pipeline, determine a saturated refrigerant pressure in the refrigerant pipeline according to the ambient temperature and a predetermined saturated pressure relationship, and determine a pipeline state of the refrigerant pipeline according to the refrigerant pressure and the saturated refrigerant pressure, where the pipeline state includes a sealed state and a leakage state; and
a control module 402, configured to control the air conditioning system to operate according to a preset mode when the pipeline state is the sealed state; and determine an emergency mode of the air conditioning system according to the refrigerant pressure when the pipeline state is the leakage state, and control the air conditioning system to execute the emergency mode, where the emergency mode at least includes a power-off mode and a refrigerant discharge mode.

It should be noted that the above steps S100 to S150 and other steps are merely for convenience of description and do not constitute a temporal limitation on the steps in the method for controlling an air conditioning system. Furthermore, some contents have been described in detail in the method for controlling an air conditioning system according to the embodiments of the first aspect, and all contents in the method for controlling an air conditioning system may further be applied to the apparatus for controlling an air conditioning system according to the embodiments of the second aspect. Therefore, in order to avoid repetitive descriptions, detailed explanations are not expanded upon in the apparatus for controlling an air conditioning system according to the embodiments of the second aspect. Similarly, the contents in the above two aspects of the embodiments may be used to explain the contents of all subsequent aspects of the embodiments, so repeated contents will not be redundantly described in the subsequent embodiments. The technical effects of the apparatus for controlling an air conditioning system according to embodiments of the present application correspond to the technical effects of the above method for controlling an air conditioning system, which will not be repeated here.

An air conditioning system according to the embodiments of the third aspect of the present application includes a memory, a processor, and a computer program stored on the memory and executable on the processor, where the processor executes the program to implement the steps of the method for controlling an air conditioning system according to the embodiments of the first aspect of the present application.

FIG. 5 illustrates a schematic physical structure diagram of an electronic device of an air conditioning system. The electronic device may include: a processor 810, a communications interface 820, a memory 830, and a communication bus 840, where the processor 810, the communications interface 820, and the memory 830 complete mutual communication through the communication bus 840. The processor 810 may invoke logic instructions in the memory 830 to execute the method for controlling an air conditioning system. The method includes: acquiring an ambient temperature and a refrigerant pressure in a refrigerant pipeline, determining a saturated refrigerant pressure in the refrigerant pipeline according to the ambient temperature and a predetermined saturated pressure relationship, and determining a pipeline state of the refrigerant pipeline according to the refrigerant pressure and the saturated refrigerant pressure, where the pipeline state includes a sealed state and a leakage state; controlling the air conditioning system to operate according to a preset mode when the pipeline state is the sealed state; and determining an emergency mode of the air conditioning system according to the refrigerant pressure when the pipeline state is the leakage state, and controlling the air conditioning system to execute the emergency mode, where the emergency mode at least includes a power-off mode and a refrigerant discharge mode.

In addition, when the logic instructions in the aforementioned memory 830 may be implemented in the form of a software functional unit and sold or used as an independent product, they may be stored in a computer-readable storage medium. Based on this understanding, the solutions of the present application essentially, or the part contributing to the prior art, or a part of the solutions may be embodied in the form of a software product. The computer software product is stored in a storage medium and includes several instructions to enable a computer device (which may be a personal computer, a server, or a network device, etc.) to execute all or part of the steps of the methods described in the various embodiments of the present application. The aforementioned storage medium includes: various media that may store program codes, such as a U disk, a mobile hard disk, a read-only memory (ROM), a random access memory (RAM), a magnetic disk, or an optical disk.

The apparatus embodiments described above are merely schematic. The units described as separate components may or may not be physically separated, and the components displayed as units may or may not be physical units, that is, they may be located in one place or distributed to multiple network units. Part or all of the modules may be selected according to actual needs to achieve the purpose of the solutions in this embodiment. Those skilled in the art may understand and implement it without creative efforts.

Through the descriptions of the above implementations, those skilled in the art may clearly understand that each implementation may be realized by means of software plus a necessary universal hardware platform, and of course, may further be realized by hardware. Based on this understanding, the part of the above solutions that essentially contributes to the prior art may be embodied in the form of a software product. The computer software product may be stored in a computer-readable storage medium, such as a ROM/RAM, a magnetic disk, an optical disk, etc., including several instructions to enable a computer device (which may be a personal computer, a server, or a network device, etc.) to execute the methods described in the various embodiments or some parts of the embodiments.

The above are merely preferred embodiments of the present application and are not intended to limit the present application. Any modifications, equivalent substitutions, improvements, etc. made within the principles of the present application shall be included in the protection scope of the present application.

## Claims

1. A method for controlling an air conditioning system, comprising:
acquiring an ambient temperature and a refrigerant pressure in a refrigerant pipeline, determining a saturated refrigerant pressure in the refrigerant pipeline according to the ambient temperature and a predetermined saturated pressure relationship, and determining a pipeline state of the refrigerant pipeline according to the refrigerant pressure and the saturated refrigerant pressure, wherein the pipeline state comprises a sealed state and a leakage state;
controlling the air conditioning system to operate according to a preset mode when the pipeline state is the sealed state; and
determining an emergency mode of the air conditioning system according to the refrigerant pressure when the pipeline state is the leakage state, and controlling the air conditioning system to execute the emergency mode, wherein the emergency mode at least comprises a power-off mode and a refrigerant discharge mode.

2. The method of claim 1, wherein determining the pipeline state of the refrigerant pipeline according to the refrigerant pressure and the saturated refrigerant pressure comprises:
determining that the pipeline state is the sealed state when the refrigerant pressure is greater than or equal to the saturated refrigerant pressure; and
determining that the pipeline state is the leakage state when the refrigerant pressure is less than the saturated refrigerant pressure.

3. The method of claim 2, wherein determining the emergency mode of the air conditioning system according to the refrigerant pressure, comprises:
determining that the emergency mode is the refrigerant discharge mode when the refrigerant pressure is less than the saturated refrigerant pressure, and greater than a minimum refrigerant operating pressure; and
determining that the emergency mode is the power-off mode when the refrigerant pressure is less than or equal to the minimum refrigerant operating pressure.

4. The method of claim 2, wherein when the emergency mode is the refrigerant discharge mode, controlling the air conditioning system to execute the emergency mode comprises:
controlling a fan to operate until a preset condition is met,
wherein the preset condition comprises: an operating duration of the fan is greater than or equal to a preset duration, or a refrigerant concentration in a lower cavity is less than or equal to a preset safe concentration.

5. The method of claim 4, wherein when the emergency mode is the refrigerant discharge mode, controlling the air conditioning system to execute the emergency mode further comprises:
controlling a display panel to display prompt information, wherein the prompt information at least comprises information prompting maintenance.

6. The method of any of claims 1 to 5, further comprising:
acquiring a real-time temperature in a sealed box, and determining a temperature state of the air conditioning system according to the real-time temperature and a predetermined temperature-load relationship, wherein the temperature state comprises a normal state and an overtemperature state;
reducing an operating load of the air conditioning system to a target load when the temperature state is the overtemperature state, wherein a ratio between the target load and the operating load is less than 1; and
controlling the air conditioning system to operate according to the preset mode when the temperature state is the normal state.

7. The method of claim 6, wherein when the temperature state is the overtemperature state, the method further comprises:
controlling a heat dissipation air duct to be opened, determining a heat dissipation level of the fan according to the real-time temperature and a predetermined heat dissipation level relationship, and controlling the fan to operate at the heat dissipation gear.

8. The method of claim 6, wherein after reducing the operating load of the air conditioning system to the target load, the method further comprises:
controlling the air conditioning system to shut down when the operating load is less than or equal to a preset load.

9. An apparatus for controlling an air conditioning system, comprising:
an acquisition module, configured to acquire an ambient temperature and a refrigerant pressure in a refrigerant pipeline, determine a saturated refrigerant pressure in the refrigerant pipeline according to the ambient temperature and a predetermined saturated pressure relationship, and determine a pipeline state of the refrigerant pipeline according to the refrigerant pressure and the saturated refrigerant pressure, wherein the pipeline state comprises a sealed state and a leakage state; and
a control module, configured to control the air conditioning system to operate according to a preset mode when the pipeline state is the sealed state; and determine an emergency mode of the air conditioning system according to the refrigerant pressure when the pipeline state is the leakage state, and control the air conditioning system to execute the emergency mode, wherein the emergency mode at least comprises a power-off mode and a refrigerant discharge mode.

10. An air conditioning system, comprising: a memory, a processor, and a computer program stored on the memory and executable on the processor, wherein the processor executes the computer program to implement the method of any of claims 1 to 8.
